(19) Europäisches Patentamt
European Patent Office
Office européen des brevets

(11) EP 1 634 241 B1

(12) **EUROPÄISCHE PATENTSCHRIFT**

(45) Veröffentlichungstag und Bekanntmachung des Hinweises auf die Patenterteilung:
**29.09.2010 Patentblatt 2010/39**

(21) Anmeldenummer: **04723515.5**

(22) Anmeldetag: **26.03.2004**

(51) Int Cl.:
*G06T 7/00* (2006.01)          *G01S 17/87* (2006.01)

(86) Internationale Anmeldenummer:
**PCT/DE2004/000634**

(87) Internationale Veröffentlichungsnummer:
**WO 2004/111938 (23.12.2004 Gazette 2004/52)**

(54) **VERFAHREN UND VORRICHTUNG ZUR OBJEKTBESTIMMUNG IN FAHRERASSISTENZSYSTEMEN FÜR KRAFTFAHRZEUGE**

METHOD AND DEVICE FOR OBJECT RECOGNITION IN DRIVER AID SYSTEMS FOR MOTOR VEHICLES

PROCEDE ET DISPOSITIF DE DETERMINATION D'OBJET DANS DES SYSTEMES D'ASSISTANCE AU CONDUCTEUR POUR VEHICULES AUTOMOBILES

(84) Benannte Vertragsstaaten:
**DE FR GB SE**

(30) Priorität: **30.05.2003 DE 10324897**

(43) Veröffentlichungstag der Anmeldung:
**15.03.2006 Patentblatt 2006/11**

(73) Patentinhaber: **ROBERT BOSCH GMBH**
**70442 Stuttgart (DE)**

(72) Erfinder: **BAEHRING, Dietrich**
**31134 Hildesheim (DE)**

(56) Entgegenhaltungen:
- BING MA ET AL: "A robust bayesian multisensor fusion algorithm for joint lane and pavement boundary detection" PROCEEDINGS 2001 INTERNATIONAL CONFERENCE ON IMAGE PROCESSING. ICIP 2001. THESSALONIKI, GREECE, OCT. 7 - 10, 2001, INTERNATIONAL CONFERENCE ON IMAGE PROCESSING, NEW YORK, NY : IEEE, US, Bd. VOL. 1 OF 3. CONF. 8, 7. Oktober 2001 (2001-10-07), Seiten 762-765, XP010564971 ISBN: 0-7803-6725-1
- COUE C ET AL: "Multi-sensor data fusion using bayesian programming - an automotive application" PROCEEDINGS OF THE 2002 IEEE/RSJ INTERNATIONAL CONFERENCE ON INTELLIGENT ROBOTS AND SYSTEMS. (IROS 2002). LAUSANNE, SWITZERLAND, SEPT. 30 - OCT. 4, 2002, IEEE/RSJ INTERNATIONAL CONFERENCE ON INTELLIGENT ROBOTS AND SYSTEMS, NEW YORK, NY : IEEE, US, Bd. VOL. 1 OF 3, 30. September 2002 (2002-09-30), Seiten 141-146, XP010609242 ISBN: 0-7803-7398-7
- COUE C ET AL: "Using bayesian programming for multi-sensor multi-target tracking in automotive applications" IEEE, Bd. 2, 14. September 2003 (2003-09-14), Seiten 2104-2109, XP010667147

EP 1 634 241 B1

**Beschreibung**

Stand der Technik

Die Erfindung betrifft ein Verfahren und eine Vorrichtung zur Objektbestimmung in einem Fahrerassistenzsystem für Kraftfahrzeuge, bei dem durch Auswertung einer Videobildfolge und durch MAP-Schätzung (Maximum-A-Posteriori Schätzung) einer Bayes'schen Wahrscheinlichkeitsfunktion eine Ergebnisgröße bestimmt wird, die den zustand des Objekts beschreibt. Das Verfahren dient insbesondere dazu, Objekte, beispielsweise vorausfahrende Fahrzeuge, im Umfeld des eigenen Fahrzeugs zu orten, also deren Position zu bestimmen, und zugleich die Objekthypothesen zu verifizieren, um festzustellen, ob es sich um echte Objekte oder Scheinobjekte, Rauschen oder dergleichen handelt. Anhand dieser Informationen ist das Fahrerassistenzsystem dann in der Lage, den Fahrer bei der Führung des Fahrzeugs zu unterstützen oder ihm bestimmte Funktionen abzunehmen, beispielsweise in einem bekannten ACC-System (Adaptive Cruise Control) die Einhaltung des Sicherheitsabstandes zu einem vorausfahrenden Fahrzeug.

Aus einer Veröffentlichung "Robust car tracking using Kalman filtering and Bayesian templates", Frank Dellaert und C. Thorpe, Department of Computer Science and the Roboting Institute, Carnegie Mellon University, Pitsburgh, USA, ist ein Verfahren der oben genannten Art bekannt, bei dem die Position eines Fahrzeugs im Videobild dadurch bestimmt wird, daß eine rechteckige Begrenzungsbox so in das Videobild gelegt wird, daß sie möglichst genau mit der Umrißlinie der Rückfront des Fahrzeugs übereinstimmt. Die Lage der Begrenzungsbox im Videobild stellt dann die Ergebnisgröße dar, die den Ort (und die Ausdehnung) des Objekts beschreibt. Die MAP-Schätzung dient hier dazu, die Form und Lage der Begrenzungsbox optimal an den Fahrzeugumriß anzupassen. Zu diesem Zweck wird eine Bayes'sche Wahrscheinlichkeitsfunktion P(F|B) definiert, die, vereinfacht gesagt, eine Funktion der wahren Position F des Fahrzeugs und der Lage B der Begrenzungsbox ist. Diese Funktion gibt die bedingte Wahrscheinlichkeit dafür an, daß F die wahre Position des Fahrzeugs ist, bei gegebener Bedingung, daß B die Lage der Begrenzungsbox ist. In der realen Auswertungssituation ist aber nicht die Lage B der Begrenzungsbox gegeben, sondern vielmehr die wahre Position F des Fahrzeugs, kodiert in der Bildinformation des Videobildes. Gefragt ist somit, welche Lage B die Begrenzungsbox haben muß, damit sie mit größtmöglicher Wahrscheinlichkeit die wahre Position F des Fahrzeugs beschreibt. Gesucht ist also das Maximum der Wahrscheinlichkeit P(B|F), also das Maximum der Wahrscheinlichkeit dafür, daß B die Lage der Begrenzungsbox ist, bei gegebener Bedingung, daß F die wahre Position des Fahrzeugs ist. Diese Wahrscheinlichkeit ist nach dem Satz von Bayes gegeben durch Formel:

$$P(B|F) = P(F|B) \cdot P(B).$$

Darin ist P(B) die Wahrscheinlichkeit dafür, daß die Begrenzungsbox die Lage B hat. Diese Wahrscheinlichkeit geht als $\alpha$-priori-Information in die Auswertung ein und wird aus dem Vorwissen berechnet, das man im vorausgegangenen Auswertungsschritt erhalten hat. Dazu wird P(B) als eine Gauß-Verteilung modelliert, deren Mittelwert der Lage B der Begrenzungsbox im vorausgegangenen Auswertungszyklus entspricht und deren Streuung die Verläßlichkeit dieser Begrenzungsbox angibt.

In die Funktion P(B|F), geht außer diesem Vorwissen auch die $\alpha$-po-steriori-Information P(F|B) ein, die durch Auswertung des neuesten

Videobildes gewonnen wird. Die Maximum-A-Posteriori-Schätzung für B besteht im Aufsuchen des Maximums der Verteilung P(B|F).

Auf diese Weise ist es mit dem bekannten Verfahren möglich, die Position des Fahrzeugs, repräsentiert durch seine Begrenzungsbox, in den aufeinanderfolgenden Videobildern zu verfolgen.

Das beschriebene Verfahren stützt sich jedoch nur auf die Auswertung eines einzigen Merkmals im Videobild, nämlich der Umrißlinie des Fahrzeugs.

Um die Genauigkeit und Robustheit der Objektortung zu steigern ist es bekannt, mehrere unabhängig von einander gewonnene Meßwerte für dieselbe Ergebnisgröße miteinander abzugleichen und zu einer einzigen Ergebnisgröße zu fusionieren. In einem Aufsatz "Radar and Vision Data Fusion for Hybride Adaptive Cruise Control on Highways" von Hofman, Rieder und Dickmanns, Institut für Systemdynamik und Flugmechanik, Universität der Bundeswehr, München, in B.Schiele und G. Sagerer (Herausgeber): ICVS 2001, LNCS 2095, Seiten 125-138, Springer-Verlag Berlin/ Heidelberg 2001, wird ein Verfahren beschrieben, bei dem die durch Bildauswertung gewonnenen Ortungsdaten mit Ortungsdaten fusioniert werden, die mit Hilfe eines winkelauflösenden Radarsystems erhalten wurden.

Ein Verfahren nach dem Oberbegriff des Anspruchs 1 ist bekannt aus: Coué, C, et al.: "Multi-sensor data fusion using bayesian programming - an automotive application" PROCEEDINGS OF THE 2002 IEEE/RSJ INTERNATIONAL CONFERENCE ON INTELLIGENT ROBOTS AND SYSTEMS (IROS 2002), LAUSANNE, SWITZERLAND, SEPT. 30 - OCT. 4, 2002, IEEE/RSJ INTERNATIONAL CONFERENCE ON INTELLIGENT ROBOTS AND SYSTEMS, NEW YORK, NY: IEEE, US Bd. VOL. 1 OF 3, 30. September 2002 (2002-09-30), Seiten 141-146, XP010609242 ISBN: 0-7803-7398-7.

Vorteile der Erfindung

Die Erfindung mit den in den unabhängigen Ansprüchen angegebenen Merkmalen hat den Vorteil, daß sie es auf einfache und effiziente Weise erlaubt, eine Vielzahl unabhängig voneinander gewonnener Meßergebnisse miteinander zu fusionieren. Dabei wird erfindungsgemäß die MAP-Schätzung zur Fusion der verschiedenen, jeweils mit Unsicherheiten behafteten Meßergebnisse benutzt.

In einem ersten Schritt werden mindestens zwei voneinander unabhängige Meßwerte für die Ergebnisgröße bestimmt. Mindestens einer dieser Meßwerte wird durch Auswertung des Videobildes gewonnen, beispielsweise durch Auswertung der Umrißlinie. Die anderen Meßwerte können durch Bildauswertung anhand anderer Merkmale des Objektes erhalten werden, bei Fahrzeugen beispielsweise anhand des Schattenwurfes unter dem Fahrzeug, anhand der für Fahrzeuge charakteristischen Symmetrie oder auch anhand der weitgehend identischen Querbewegungen sämtlicher Punkte des Fahrzeugs. Diese anderen Meßgrößen können jedoch auch aus anderen Quellen stammen. In einer besonders bevorzugten Ausführungsform der Erfindung stammt zumindest eine Meßgröße vom Radarsystem. Dabei wird die mit dem Radarsystem gemessene dreidimensionale Position des Fahrzeugs in das zweidimensionale Koordinatensystem des Videobildes projiziert.

In einem weiteren Schritt wird dann jedem Meßwert ein Gütefaktor zugeordnet, der die Verläßlichkeit dieses Meßwertes beschreibt. Zumeist wird es sich bei den Meßwerten um vektorielle Größen handeln. In diesem Fall wird jeder einzelnen Komponente jedes Meßwertes ein Gütefaktor zugeordnet. Beispielsweise wird bei dem durch Rädarortung erhaltenen Meßwert der Gütefaktor für die (waagerechte) x-Koordinate im Videobild relativ klein sein, weil das Radarsystem nur ein begrenztes Winkelauflösungsvermögen hat. Der Gütefaktor für die y-Koordinate wird dagegen relativ groß sein, da diese Koordinate maßgeblich von der Entfernung des Objektes abhängt, die mit dem Radarsystem sehr genau gemessen werden kann. Bei dem durch Bildauswertung anhand der Umrißlinie des Fahrzeugs erhaltenen Meßwert ist der Gütefaktor für die x- und die y-Koordinate davon abhängig, wie gut die linken und rechten bzw. oberen und unteren Kanten des Umrißbildes mit der Begrenzungsbox übereinstimmen.

Das erfindungsgemäße Verfahren geht davon aus, daß die in den einzelnen Komponenten der Meßwerte enthaltenen Fehler in guter Nährung durch Gauß-Verteilungen beschrieben werden können. Die Wahrscheinlichkeitsverteilung jedes Meßwertes wird deshalb in einem weiteren Verfahrensschritt durch eine Gauß-Verteilung modelliert, deren Streuung durch den Güterfaktor des betreffenden Meßwertes bestimmt ist. Bei vektoriellen Meßwerten handelt es sich um mehrdimensionale Gauß-Verteilungen mit vorzugsweise voneinander unabhängigen (nicht korrelierten) Streuungen für die einzelnen Komponenten.

Die auf diese Weise modellierten Wahrscheinlichkeitsverteilungen für die einzelnen Meßwerte werden dann miteinander multipliziert, um die Bayes'sche Wahrscheinlichkeitsfunktion für die MAP-Schätzung zu erhalten. Da die einzelnen Wahrscheinlichkeitsverteilungen Gauß-Verteilungen sind, ist auch ihr Produkt wieder eine Gauß-Verteilung, und die Multiplikation mit dem Vorwissen, das seinerseits durch eine Gauß-Verteilung beschrieben wird, ergibt wieder eine Gauß-Verteilung. Bei der MAP-Schätzung muß dann das Maximum dieser letztlich erhaltenen Gauß-Verteilung aufgesucht werden. Da diese Gauß-Verteilung die Form eines Produktes aus Exponentialfunktionen hat, läßt sich das Maximum in bequemer Weise aufsuchen, indem das Produkt logarithmiert wird. Aus dem Produkt wird dabei eine Summe, und das Auffinden des Maximums reduziert sich auf ein Extremwertproblem, das mit geringem Rechenaufwand und daher in Echtzeit lösbar ist.

Ein besonderer Vorteil des Verfahrens besteht darin, daß es die effiziente Fusion einer im Prinzip beliebig großen Vielzahl von Meßwerten erlaubt, so daß die Genauigkeit und Robustheit des Verfahrens nach Bedarf gesteigert werden kann. Hinsichtlich des Ursprungs der Meßwerte gibt es praktisch keine Beschränkungen, sofern nur die Verläßlichkeit jedes Meßwertes hinreichend genau durch eine Gauß-Verteilung beschrieben werden kann und für jeden Meßwert ein geeigneter Gütefaktor verfügbar ist.

Ein weiterer wesentlicher Vorteil des Verfahrens besteht darin, daß es auch eine einfache Verifizierung von Objekthypothesen gestattet, da der letztlich erhaltenen Ergebnisgröße wieder in sehr einfacher Weise ein Gütefaktor zugeordnet werden kann. Im einfachsten Fall ist dieser Gütefaktor durch die Streuung der letztlich durch Produktbildung erhaltenen und geeignet normierten Gauß-Verteilung gegeben. Wahlweise ist es jedoch auch möglich, bei der Berechnung des Gütefaktors die von den verschiedenen Meßwerten herrührenden Beiträge in dem Produkt unterschiedlich zu gewichten, so daß sich die Beiträge der Einzelmerkmale zur Gesamtgüte gezielt steuern lassen. Damit läßt sich dem Umstand Rechnung tragen, daß in der Praxis die Bestimmung der einzelnen Meßdaten witterungs- oder verfahrensbedingt oft nur mit unterschiedlichen Detektionssicherheiten möglich ist.

Da das beschriebene Fusionsverfahren auf einer MAP-Schätzung beruht, ermöglicht es die explizite Berücksichtigung von Vorwissen in Form der a-priori-Wahrscheinlichkeit. Nach einer Initialisierungsphase wird die durch MAP-Schätzung im vorausgegangenen Zeitschritt bestimmte Objektposition als a-priori-Wahrscheinlichkeit benutzt. Auf diese Weise wird eine besonders stabile Verfolgung der Bewegungen des Objektes im Laufe der Zeit ermöglicht, ohne daß ein explizites Tracking-Verfahren ausgeführt werden muß.

Gemäß einer vorteilhaften Weiterbildung toleriert das Verfahren auch den vorübergehenden Ausfall eines oder mehrerer der benötigten Meßwerte. In diesem Fall wird die nicht vorhandene Gauß-Verteilung, die diesen Meßwert beschreiben sollte, in dem Produkt der Gauß-Verteilungen durch einen konstanten Faktor ersetzt. Die Größe dieses Faktors ist nicht kritisch, da der Faktor im wesentlichen nur dazu dient zu verhindern, daß das Produkt Null wird. Diese Weiterbildung gestattet es insbesondere, das Objekt auch dann zu verfolgen, wenn es sich zwar noch innerhalb des Videobildes befindet, aber den Ortungsbereich des Radarsensors bereits verlassen hat.

Zeichnung

Ein Ausführungsbeispiel der Erfindung ist in den Zeichnungen dargestellt und in der nachfolgenden Beschreibung näher erläutert.

Es zeigen:

Figur 1    ein Blockdiagramm eines ACC-Systems für Kraftfahrzeuge mit einer erfindungsgemäßen Vorrichtung zur Objektbestimmung;

Figur 2    ein Videobild, das mit Hilfe des erfindungsgemäßen Verfahrens auszuwerten ist; Figur 3 das Videobild nach Figur 2, mit als Ellipsen einge- zeichneten Wahrscheinlichkeitsverteilungen für zwei Meßwerte;

Figur 4    eine Projektion der Wahrscheinlichkeitsverteilungen nach Figur 3 auf die x-Achse des Bild-Koordinatensystems;

Figur 5    ein Diagramm analog zu Figur 4, zur Erläuterung eines Verfahrens zur Berechnung eines Gütefaktors; und

Figur 6    ein Flußdiagramm des Verfahrens

Beschreibung des Ausführungsbeispiels

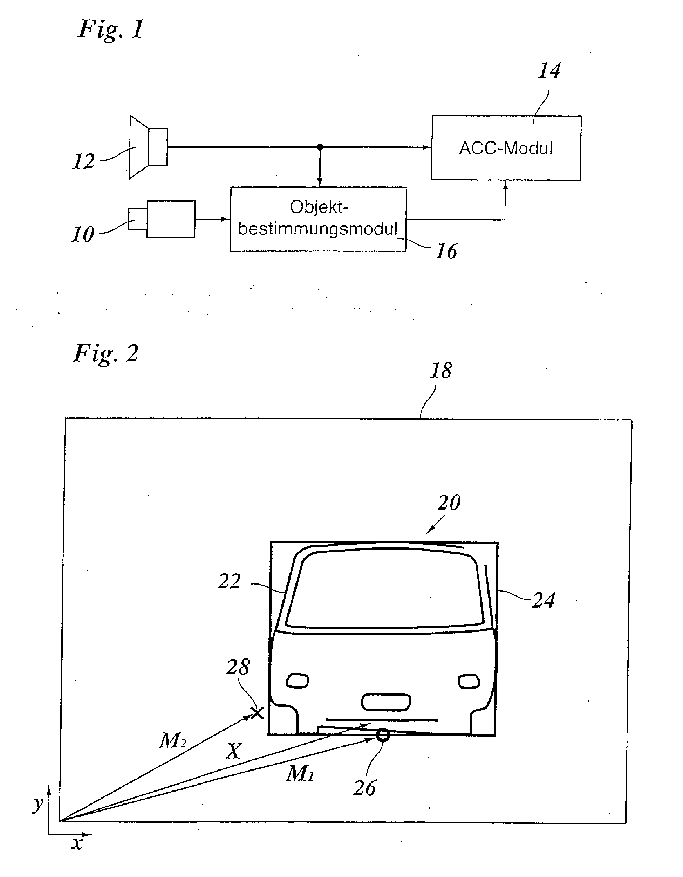

Figur 1 zeigt den allgemeinen Aufbau eines ACC-Systems (Adaptive Cruise Control) für Kraftfahrzeuge. Als Ortungssysteme sind eine Videokamera 10 und ein Radarsensor 12, beispielsweise ein winkelauflösendes FMCW-Radar, im Fahrzeug eingebaut. Die Ortungssignale des Radarsensors 12 werden in bekannter Weise in einem ACC-Modul 14 ausgewertet, um den Abstand zu einem vorausfahrenden Fahrzeug zu regeln. Das durch diese Teilkomponenten gebildete System ist auch dann funktionsfähig, wenn aufgrund schlechter Sicht oder eines Fehlers kein Bild von der Videokamera 10 zur Verfügung steht. Bei normalen Sichtverhältnissen wird das von der Kamera 10 aufgenommene Videobild an ein Objektbestimmungsmodul 16 übermittelt, das durch einen Mikroprozessor oder ein anderes elektronisches Datenverarbeitungssystem gebildet wird und die nachfolgend zu beschreibenden Funktionen ausführt. Dazu erhält das Objektbestimmungsmodul 16 auch die Ortungssignale des Radarsensors 12. Die Ergebnisse der Objektbestimmung, also insbesondere die Orte und Abmessungen der georteten Objekte sowie ein Gütefaktor, der die Verläßlichkeit der Ergebnisse kennzeichnet, werden dem ACC-Modul 14 zur Verfügung gestellt und ermöglichen dort eine genauere Erfassung und Bewertung der Verkehrssituation.

Figur 2 zeigt ein Videobild 18, das mit der Videokamera 10 aufgenommen wurde. Dieses Videobild ist beispielsweise durch Sobel-Filterung in ein sogenanntes Kantenbild umgewandelt worden, bei dem die einzelnen Pixel des Bildes keine Grauwerte repräsentieren, sondern lediglich die sogenannte Kantenaktivität, d. h., den Hell/Dunkel-Kontrast oder Helligkeitsgradienten. Das Kantenbild läßt daher die Umrißlinie 22 des Fahrzeugs 10 deutlich hervortreten. Mit bekannten Verfahren der Bildauswertung wird nun eine Begrenzungsbox 24 so in das Videobild 18 gelegt, daß sie möglichst gut an die Umrißlinie 22 des Fahrzeugs angepaßt ist. Ein Beispiel eines solchen Verfahrens wird beschrieben in der gleichzeitig mit dieser Anmeldung eingereichten deutschen Patentanmeldung desselben Erfinders mit dem Titel "Verfahren und Vorrichtung zur Objektortung für Kraftfahrzeuge".

Es wird nun ein Verfahren beschrieben, mit dem im Objektbestimmungsmodul 16 durch kombinierte Auswertung der Bildinformation in dem Videobild 18 und der Ortungsdaten des Radarsensors 12 die relevanten Daten eines Objekts, z. B. eines Fahrzeugs 20, bestimmt werden. Dabei wird von der Hypothese ausgegangen, daß die im Videobild 18 erkennbare Umrißlinie 22 und ein vom Radarsensor 12 empfangenes Echo zu demselben Objekt gehören und somit gemeinsam ein gültiges, d. h., real vorhandenes Objekt spezifizieren. Diese Hypothese ist im Laufe des Verfahrens zu verifizieren. Außerdem soll durch das Verfahren ein möglichst genauer Wert für die räumliche Lage des Objekts bestimmt werden. Die gesuchte Ergebnisgröße ist also ein Ortsvektor X, der die Position des Fahrzeugs in dem zweidimensionalen x-y-Koordinatensystem des Videobildes 18 angibt. Aus diesem Ortsvektor X läßt sich dann zusammen mit der vom Radarsensor 12 gemessenen Objektentfernung die räumliche Lage des Objektes berechnen.

Eine erste Meßgröße 24 für diese Ergebnisgröße wird durch Auswertung der Umrißlinie 22 im Kantenbild bestimmt und ist gegeben durch den Ortsvektor $M_1$ eines Punktes 26, der auf der Mitte des unteren Schenkels der Begrenzungsbox 24 liegt. Dahinter steht die Konvention, daß Fahrzeugpositionen generell durch die Projektion der Mitte der Rückfront des Fahrzeugs auf die Fahrbahnebene angegeben werden.

Unabhängig davon wird die Position des Fahrzeugs (in Polarkoordinaten in einem in der Fahrbahnebene liegenden Koordinatensystem) auch mit Hilfe des winkelauflösenden Radarsensors 12 gemessen. Die Projektion der so gemessenen Fahrzeugposition in das Videobild 18 ergibt den durch ein Kreuz 28 gekennzeichneten Punkt in Figur 2. Aufgrund von Meßungenauigkeiten und aufgrund der nicht genau bekannten Lage des Radar-Reflexionszentrums am Fahrzeug weichen die beiden Fahrzeugpositionen deutlich voneinander ab. Ein zweiter Meßwert für die Fahrzeugposition ist durch den Ortsvektor $M_2$ zu dem Punkt 28 gegeben.

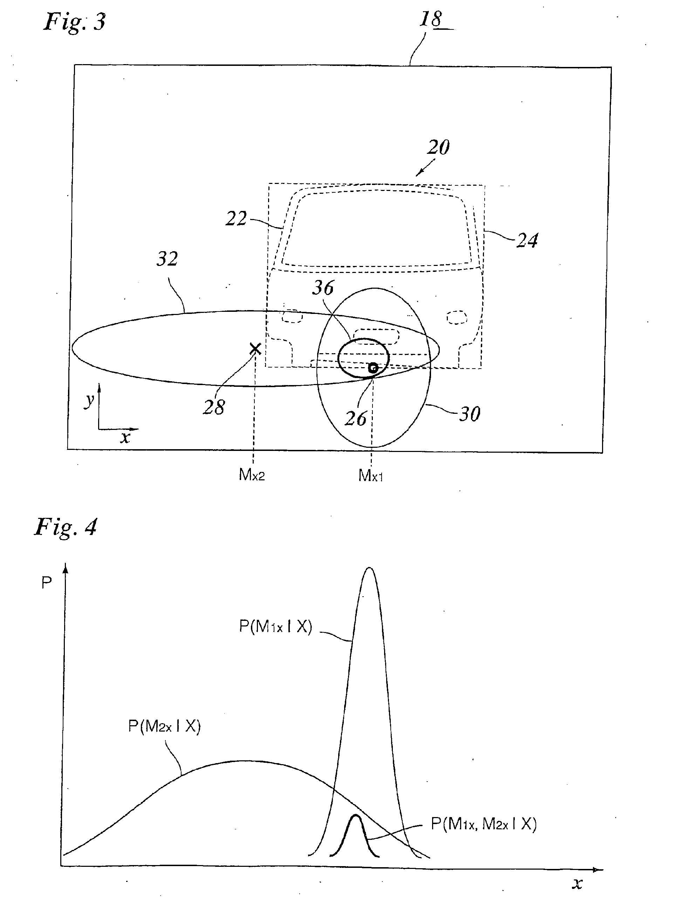

Aufgrund von Meßfehlern und Störeinflüssen sind die Meßgrößen M1 und M2 nicht genau bestimmt, sondern mit gewissen Fehlertoleranzen behaftet. Diese Fehlertoleranzen sind in Figur 3 durch Ellipsen 30 und 32 dargestellt.

Jeder Komponente der Meßgrößen M1 und M2 wird ein bestimmter Gütefaktor zwischen 0 und 1 zugeordnet, der das Ausmaß der Fehlertoleranz angibt. Der Gütefaktor 1 würde bedeuten, daß der Meßwert exakt ist. Die Fehlertoleranzen oder Wahrscheinlichkeitsverteilungen der Meßwerte werden bei dem hier vorgeschlagenen Verfahren als Gauß-Verteilungen modelliert. Genauer gibt die Gauß-Verteilung für den Meßwert $M_1$ die bedingte Wahrscheinlichkeit $P(M_1|X)$ dafür an, daß man den Meßwert $M_1$ erhält, wenn die Bedingung gegeben ist, daß die (nicht bekannte) wahre Position des Fahrzeugs 20 im x-y-Koordinatensystem durch den Ortsvektor X gegeben ist. Entsprechendes gilt für $M_2$. Die Gauß-Verteilung zu jedem Meßwert hat hier die spezielle Form einer zweidimensionalen Glockenfläche über der Bildebene. Die Ellipsen 30 und 32 in Figur 3 sind Schnitte durch diese Glockenflächen in einer bestimmten Höhe, d. h., bei einem bestimmten Wahrscheinlichkeitswert. Die Streuungen der Gauß-Verteilungen in den einzelnen Komponenten sind durch die zugehörigen Gütefaktoren gegeben. Ein großer Gütefaktor bedeutet eine enge Glockenkurve (schmale Ellipse), und ein niedriger Gütefaktor bedeutet eine weite Glockenkurve (breite Ellipse). Die Gauß-Verteilungen sind wie üblich so normiert, daß ihr Integral (Volumen unter der Glocke) gleich 1 ist.

Für den durch Bildauswertung erhaltenen Meßwert $M_1$ ist der Gütefaktor für die x-Komponente dadurch bestimmt, wie genau die senkrechten, seitlichen Grenzen der Umrißlinie 22 zu den senkrechten Schenkeln der Begrenzungsbox 24 passen. Ein geeignetes Maß dafür wäre z. B. das Integral der mittleren quadratischen Abweichung über die betreffenden Seiten der Begrenzungsbox. Entsprechend ist der Gütefaktor für die y-Komponente von der Übereinstimmung zwischen den oberen und unteren Begrenzungen der Umrißlinie 22 und den oberen und unteren Schenkeln der Begrenzungsbox 24 abhängig. Die Streuung sigmai für die Komponente i des Meßwertes mit dem Gütefaktor $g_i$, läßt sich dann z. B. modellieren durch: sigmai = $sigma_{max} \cdot e^{-g_i} + C$, wobei $sigma_{max}$ und C geeignet gewählte Konstanten sind. Da im allgemeinen die oberen und unteren Ränder der Umrißlinie 22 weniger scharf definiert sind als die linken und rechten Ränder, ergibt sich in y-Richtung eine größere Streuung als in x-Richtung. Deshalb hat die Ellipse 30 hier eine in vertikaler Richtung langgestreckte Form.

Bei der durch Radar-Messung erhaltenen Meßgröße M2 sind die Gütefaktoren und entsprechend die Streuungen der Gauß-Verteilung maßgeblich durch die Geräteparameter des Radarsensors bestimmt. Diese Parameter werden vorab experimentell gemessen. Die abgeflachte Form der Ellipse 32 repräsentiert die schlechte Winkelauflösung des Radarsensors.

Um die Meßergebnisse M1 und M2 zu fusionieren, wird nun unter der Annahme bedingter Unabhängikeit der Meßergebnisse eine Bayes'sche Wahrscheinlichkeitsfunktion $P(M_1, M_2|X)$ wie folgt berechnet:

$$P(M_1, M_2 | X) = P(M_1 | X) \cdot P(M_2 | X) \qquad (1)$$

Das Ergebnis ist wieder eine Gauß-Verteilung, wie in Figur 4 (für die x-Komponente) fett eingezeichnet ist. Die entsprechende Ellipse ist in Figur 3 mit 36 bezeichnet.

Um anhand dieser Bayes'schen Wahrscheinlichkeitsfunktion eine vernünftige Schätzung für die wahre Fahrzeugposition X zu erhalten, wird diese Funktion mit einer weiteren Gauß-Verteilung P(X) multipliziert, die das Vorwissen über die Fahrzeugposition X in der Form der sogenannten a-priori-Verteilungsfunktion repräsentiert.

Wenn das Fahrzeug 20 über mehrere Bilder der Videobildfolge hinweg verfolgt wird, so wird die hier beschriebene Auswertungsprozedur für jedes einzelne Videobild in Echtzeit wiederholt, bei der üblichen Bildfrequenz also in Abständen von 40 ms. Die α-priori-Verteilungsfunktion erhält man dann aus dem Ergebnis des vorangegangenen Auswertungsschrittes, wie später noch näher erläutert werden wird.

Durch Multiplikation der Bayes'schen Verteilungsfunktion mit der a-priori-Verteilung erhält man eine α-posteriori Verteilung $P(X|M_1, M_2)$:

$$P(X|M_1, M_2) = P(M_1, M_2|X) \cdot P(X) / K \qquad (2)$$

Darin ist K ein Normierungsfaktor, der für die weitere Auswertung nicht bedeutsam ist.

Die a-posteriori-Verteilung $P(X|M_1, M_2)$ gibt die bedingte Wahrscheinlichkeit dafür an, daß X die wahre Fahrzeugposition ist, wenn die Meßwerte M1 und M2 gegeben sind.

Der Ergebnisgröße $X_n(x,y)$ im Auswertungsschritt n ist dann die x,y-Position im Bild, bei der die a-posteriori-Verteilung ihr Maximum hat:

$$X_n(x,y) = \arg\max ( P(X|M_1, M_2) ) \qquad (3)$$

Im nächsten Iterationsschritt ist die so erhaltene Ergebnisgröße $X_n$ dann der Mittelwert der a-priori-Verteilung P(X). Die außerdem noch benötigte Streuung in dieser a-priori-Verteilung erhält man auf folgende Weise.

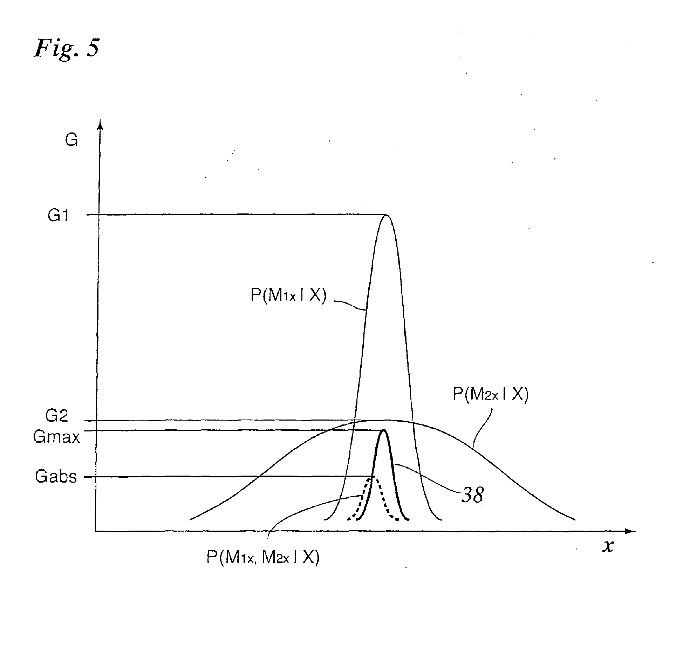

In Figur 5 ist die schon in Figur 4 gezeigte Bayes'sche Verteilungsfunktion $P(M_1, M_2|X)$ (für die x-Komponente) noch einmal gestrichelt eingezeichnet. Diese Verteilung hat ein Maximum $G_{abs}$. Die Gauß-Verteilungen $P(M_1,|X)$ und $P(M_2|X)$ haben die Maxima $G_1$ und $G_2$. Die entsprechenden Kurven sind in Figur 5 so verschoben dargestellt, daß ihre Maxima zusammenfallen. Das Produkt der so verschobenen Kurven ist als Kurve 38 eingezeichnet. Diese hat das maximal mögliche Maximum $G_{max} = G_1 \cdot G_2$.

Ein Gütefaktor G für die Ergebnisgröße X kann nun wie folgt definiert werden:

$$G = G_{abs} / G_{max} = G_{abs} / (G_1 \cdot G_2) \qquad (4)$$

Wahlweise können die Beiträge der einzelnen Meßwerte auch unterschiedlich gewichtet werden:

$$G = w_1 \cdot G_1 \cdot w_2 \cdot G_2 / G_{max}, \text{ mit } w_1 \cdot w_2 = 1 \qquad (4')$$

Die Streuung sigma$_x$, y für die a-priori-Verteilung P(X) im nächsten Iterationsschritt läßt sich dann wie folgt definieren:

$$\text{sigma}_{x,y} = S_{x,y} \cdot e^{-cG} + f(r) \qquad (5)$$

Darin sind $S_{x,y}$ Konstanten, die die maximale Streuung (für Gütefaktor 0) definieren, c ist eine Normierungskonstante für den gütefaktor G, und f(r) ist eine von der Entfernung r des Objektes (aus Radarmessung bekannt) abhängige Größe, die der größeren Ungewißheit des Ergebnisses bei größerer Objektentfernung Rechnung trägt.

Wenn ein neu aufgetretenes Objekt zu bestimmen ist, das beispielsweise zuerst mit dem Radarsensor 12 geortet wurde, so löst dies die Suche nach einer dazu passenden Begrenzungsbox im Videobild aus. Bei der Verfolgung dieses Objekts durch iterative Bildauswertung kann dann im ersten Iterationsschritt die a-priori-Verteilung P(X) aus den Ortungsdaten des Radarsensors bestimmt werden.

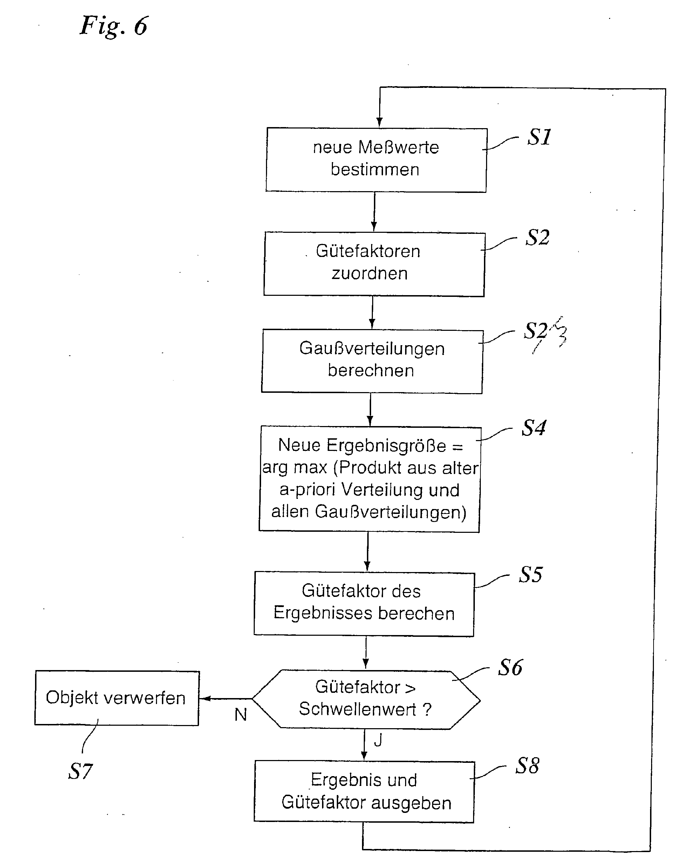

In Figur 6 sind die wesentlichen Schritte des Verfahrens für einen einzelnen Iterationsschritt noch einmal als Flußdiagramm dargestellt.

In Schritt S1 werden die neuen Meßwerte $M_1$, $M_2$ bestimmt. In Schritt S2 werden diesen Meßwerten (komponentenweise) die entsprechenden Gütefaktoren zugeordnet. In Schritt S3 werden die Gauß-Verteilungen $P(M_1|X)$ und $P(M_2|X)$ berechnet. In S4 wird die neue Ergebnisgröße berechnet, indem das Produkt aus der alten a-priori-Verteilung und allen Gauß-Verteilungen berechnet und das Maximum dieser Verteilung aufgesucht wird. In Schritt S5 wird in der in Figur 5 gezeigten weise der Gütefaktor G für das Gesamtergebnis errechnet, da dieser Gütefaktor im nächsten Iterationszyklus in Schritt S4 zur Berechnung der a-priori-Verteilung benötigt wird.

In Schritt S6 wird geprüft, ob der Gütefaktor oberhalb eines bestimmten Schwellenwertes liegt. Wenn dies nicht der Fall ist, so bedeutet dies, daß die durch Radarmessung und Bildauswertung erhaltenen Meßwerte nicht zu demselben Objekt gehören und folglich die objekthypothese verworfen werden muß (Schritt S7).

Wird der Schwellenwert überschritten, so werden in Schritt S8 die Ergebnisgröße X (wahrscheinlichster Wert für die Fahrzeugposition) und der Gütefaktor G sowie ggf. auch die Abmessungen derBegrenzungsbox 24 an das Fahrerassistenzmodul 14 ausgegeben. Die Ergebnisgröße X wird dort anhand des gemessenen Abstands auf ein räumliches Koordinatensystem umgerechnet und beispielsweise für die Entscheidung benutzt, ob das geortete Objekt auf der eigenen Fahrspur oder auf einer Nebenspur fährt. Der ebenfalls ausgegebene Gütefaktor kann im Fahrerassistenzmodul z. B. für eine Entscheidung herangezogen werden, mit welcher Dringlichkeit auf das geortete Objekt reagiert werden muß.

Während in der vorstehenden Beschreibung nur der einfache Fall betrachtet wurde, daß zwei Meßgrößen $M_1$ und $M_2$ miteinander fusioniert werden, läßt sich das Verfahren problemlos auf den Fall verallgemeinern, daß mehrere Meßgrößen zu fusionieren sind. Als weitere Meßgrößen kommen etwa Ortsvektoren $M_i$, i = 3, 4, ... in Betracht, die durch Auswertung anderer Merkmale im Videobild erhalten werden, etwa durch Auswertung der Symmetrie, des Fahrzeugschattens und dergleichen. Ebenso kommen auch Meßgrößen aus anderen Quellen in Betracht, etwa Ortungsdaten eines Nahbereichsradars oder Lidars.

Abschließend soll der Fall betrachtet werden, daß während der Verfolgung des Objektes eine der zu fusionierenden Meßgrößen $M_i$ nicht verfügbar ist. Ein Beispiel wäre etwa die Situation, daß sich das Fahrzeug zwar in Sichtbereich der Videokamera 10 befindet, aber nicht im Ortungsbereich des Radarsensors 12, so daß die Meßgröße $M_2$ und dementsprechend die Wahrscheinlichkeitsverteilung $P(M_2|X)$ für diese Meßgröße nicht verfügbar ist. In diesem Fall wird diese Verteilungsfunktion in der Bayes'schen Wahrscheinlichkeitsfunktion (Gleichung (1)) durch eine Konstante k ersetzt, deren Wert zwischen 0 und 1 liegt:

$$P(M_1, M_2 | X) = P(M_1 | X) \cdot k \qquad\qquad (1')$$

Die genaue Größe der Konstanten k ist nicht kritisch. Zweckmäßig ist ein Wert k =0,5. Auf diese Weise ist sichergestellt, daß das Produkt in Gleichung (1') trotz der fehlenden Meßgröße $M_2$ nicht 0 wird, so daß die Auswertung gemäß Gleichungen (1'), (2) und (3) auch in diesem Fall durchgeführt werden kann. Bei der Berechnung des Gütefaktors G kann das Fehlen der Meßgröße dadurch berücksichtigt werden, daß der entsprechende Gütefaktor $G_2$ in Gleichung (4) oder (4') auf einen Wert festgesetzt wird, der größer als 0 aber deutlich kleiner als 1 ist.

**Patentansprüche**

1. Verfahren zur Objektbestimmung in einem Fahrerassistenzsystem für Kraftfahrzeuge, bei dem durch Auswertung einer Videobildfolge und durch Maximum a Posteriori (MAP) Schätzung einer Bayes'schen Wahrscheinlichkeitsfunktion eine Ergebnisgröße X bestimmt wird, die den Zustand des Objekts (20) beschreibt, mit den folgenden Schritten:

   a) durch die Bildauswertung, wahlweise in Kombination mit der Auswertung von Objektdaten aus anderen Meßsystemen (12), werden mindestens zwei von einander unabhängige Meßwerte $M_1$, $M_2$ für die Ergebnisgröße X bestimmt,
   b) jedem Meßwert $M_1$, $M_2$ wird ein Gütefaktor $G_1$, $G_2$ zugeordnet, der die Verläßlichkeit des Meßwertes beschreibt,
   c) die Wahrscheinlichkeitsverteilung jedes Meßwertes wird durch eine Gauß-Verteilung $P(M_1|X)$; $P(M_2|X)$ modelliert, mit einer vom Gütefaktor abhängigen Streuung, und
   d) als Bayes'sche Wahrscheinlichkeitsfunktion $P(M_1, M_2|X)$ für die MAP-Schätzung wird das Produkt der Gauß-Verteilungen gebildet,
   **dadurch gekennzeichnet, daß** die Ergebnisgröße X iterativ für aufeinanderfolgende Bilder (18) der Videobildfolge bestimmt wird und daß in jedem Iterationsschritt in die MAP-Schätzung eine a-priori-Verteilung P(X) eingesetzt wird, die aus dem Ergebnis des vorangegangenen Iterationsschrittes abgeleitet ist,
   daß aus den für die einzelnen Meßwerte $M_1$, $M_2$ bestimmten Gauß-Verteilungen ein Gesamt-Gütefaktor G berechnet wird, der die Verläßlichkeit der Ergebnisgröße X angibt,
   und daß aus dem im vorangegangenen Iterationsschritt erhaltenen Gesamt-Gütefaktor G eine Streuung einer Gauß-Verteilung berechnet wird, deren Mittelwert die im vorangegangenen Iterationsschritt erhaltene Ergebnisgröße X ist und die die a-priori-Verteilung P(X) für den aktuellen Iterationsschritt bildet.

2. Verfahren nach Anspruch 1, **dadurch gekennzeichnet, daß** einer der Meßwerte ($M_2$) ein durch Radarmessung bestimmter und in das Videobild projizierter Ortsvektor des Objektes (20) ist.

**3.** Verfahren nach einem der vorstehenden Ansprüche, **dadurch gekennzeichnet, daß** die Streuung eine exponentiell abfallende Funktion des Gesmt-Gütefaktors G ist.

**4.** Verfahren nach einem der vorstehenden Ansprüche, **dadurch gekennzeichnet, daß** in den Fällen, in denen einer der Meßwerte ($M_1$, $M_2$) nicht verfügbar ist, in das Produkt in Schritt (d) anstelle der Gauß-Verteilung ein konstanter Faktor (k) eingesetzt wird.

**5.** Vorrichtung zur Objektbestimmung in einem Fahrerassistenzsystem für Kraftfahrzeuge, mit einer Videokamera (10) und einem Objektbestimmungsmodul (16), das Videobilder (18) der Videokamera auswertet, **dadurch gekennzeichnet, daß** in dem Objektbestimmungsmodul (16) ein Verfahren nach einem der vorstehenden Ansprüche implementiert ist.

**6.** Vorrichtung nach Anspruch 5, **dadurch gekennzeichnet, daß** zusätzlich zu der Videokamera (10) ein Radarsensor (12) vorgesehen ist und daß das Objektbestimmungsmodul (16) Ortungsdaten des Radarsensors (12) zur Bestimmung eines der Meßwerte ($M_2$) aufnimmt.

## Claims

**1.** Method for object determination in a driver assistance system for motor vehicles, in the case of which a result variable X is determined by evaluating a video image sequence and by maximum a posteriori (MAP) estimation of a Bayesian probability function which describes the state of the object (20), having the following steps:

a) in a fashion optionally combined with the evaluation of object data from other measurement systems (12), the image evaluation is used to determine at least two mutually independent measured values $M_1$, $M_2$ for the result variable X,
b) each measured value $M_1$, $M_2$ is assigned a quality factor $G_1$, $G_2$ which describes the reliability of the measured value,
c) the probability distribution of each measured value is modelled by a Gaussian distribution $P(M_1|X)$; $P(M_2|X)$ with a dispersion dependent on the quality factor,
d) the product of the Gaussian distributions is formed as Bayesian probability function $P(M_1, M_2|X)$ for the MAP estimation,

**characterized**
**in that** the result variable X is determined iteratively for consecutive images (18) of the video image sequence and in that in each iteration step an a priori distribution P(X) which is derived from the result of the preceding iteration step is introduced into the MAP estimation,
**in that** a total quality factor G which specifies the reliability of the result variable X is calculated from the Gaussian distributions determined for the individual measured values $M_1$, $M_2$,
and **in that** there is calculated from the total quality factor G obtained in the preceding iteration step a dispersion of a Gaussian distribution whose mean value is the result variable X obtained in the preceding iteration step, and which forms the a priori distribution P(X) for the current iteration step.

**2.** Method according to Claim 1, **characterized in that** one of the measured values ($M_2$) is a space vector of the object (20) determined by radar measurement and projected into the video image.

**3.** Method according to one of the preceding claims, **characterized in that** the dispersion is an exponentially decreasing function of the total quality factor G.

**4.** Method according to one of the preceding claims, **characterized in that** in the cases where one of the measured values ($M_1$, $M_2$) is not available a constant factor (k) is inserted into the product in step (d) instead of the Gaussian distribution.

**5.** Device for object determination in a driver assistance system for motor vehicles, having a video camera (10) and an object determination module (16) which evaluates video images (18) of the video camera, **characterized in that** a method according to one of the preceding claims is implemented in the object determination module (16).

**6.** Device according to Claim 5, **characterized in that** a radar sensor (12) is provided in addition to the video camera (10), and **in that** the object determination module (16) records locating data of the radar sensor (12) in order to determine one of the measured values ($M_2$).

**Revendications**

1. Procédé de détermination d'un objet dans un système d'assistance au conducteur pour véhicules automobiles, selon lequel une grandeur résultante X qui décrit l'état de l'objet (20) est déterminée par interprétation d'une séquence d'images vidéo et par estimation du maximum à posteriori (MAP) d'une fonction de probabilité de Bayes, comprenant les étapes suivantes :

   a) au moins deux valeurs mesurées $M_1$, $M_2$, indépendantes l'une de l'autre, sont déterminées pour la grandeur résultante X par interprétation de l'image, au choix en combinaison avec l'interprétation des données d'objet d'autres systèmes de mesure (12),
   b) un facteur de qualité $G_1$, $G_2$ qui décrit la fiabilité de la valeur mesurée est associé à chaque valeur mesurée $M_1$, $M_2$,
   c) la distribution de probabilité de chaque valeur mesurée est modélisée par une distribution de Gauss $P(M_1|X)$ ; $P(M_2|X)$, avec une dispersion qui dépend du facteur de qualité, et
   d) le produit des distributions de Gauss est calculé comme fonction de probabilité de Bayes $P(M_1, M_2|X)$ pour l'estimation du MAP,

   **caractérisé en ce que** la grandeur résultante X est déterminée de manière itérative pour des images successives (18) de la séquence d'images vidéo et qu'une distribution à priori $P(X)$, laquelle est dérivée du résultat de l'étape d'itération précédente, est utilisée dans l'estimation du MAP dans chaque étape de l'itération,
   qu'un facteur de qualité total G qui indique la fiabilité de la grandeur résultante X est calculé à partir des distributions de Gauss déterminées à partir des valeurs mesurées $M_1$, $M_2$ individuelles,
   et qu'à partir du facteur de qualité total G inclus dans l'étape précédente de l'itération est calculée une dispersion d'une distribution de Gauss dont la valeur moyenne forme la grandeur résultante X incluse dans l'étape précédente de l'itération ainsi que la distribution à priori $P(X)$ pour l'étape actuelle de l'itération.

2. Procédé selon la revendication 1, **caractérisé en ce que** l'une des valeurs mesurées ($M_2$) est un vecteur de lieu de l'objet (20) déterminé par la mesure au radar et projeté dans l'image vidéo.

3. Procédé selon l'une des revendications précédentes, **caractérisé en ce que** la dispersion est une fonction à décroissance exponentielle du facteur de qualité total G.

4. Procédé selon l'une des revendications précédentes, **caractérisé en ce que** dans les cas où l'une des valeurs mesurées ($M_1$, $M_2$) n'est pas disponible, un facteur constant (k) est utilisé dans le produit de l'étape (d) à la place de la distribution de Gauss.

5. Dispositif de détermination d'un objet dans un système d'assistance au conducteur pour véhicules automobiles, comprenant une caméra vidéo (10) et un module de détermination d'objet (16) qui interprète les images vidéo (18) de la caméra vidéo, **caractérisé en ce qu'**un procédé selon l'une des revendications précédentes est mis en oeuvre dans le module de détermination d'objet (16).

6. Dispositif selon la revendication 5, **caractérisé en ce qu'**en plus de la caméra vidéo (10), il est prévu un capteur radar (12) et que le module de détermination d'objet (16) enregistre les données de localisation du capteur radar (12) pour déterminer l'une des valeurs mesurées ($M_2$).

## Fig. 1

## Fig. 2

*Fig. 3*

*Fig. 4*

Fig. 5

**Fig. 6**

```
                    ┌──────────────────────┐
                    │   neue Meßwerte      │ ── S1
                    │   bestimmen          │
                    └──────────────────────┘
                              │
                    ┌──────────────────────┐
                    │   Gütefaktoren       │ ── S2
                    │   zuordnen           │
                    └──────────────────────┘
                              │
                    ┌──────────────────────┐
                    │   Gaußverteilungen   │ ── S2/S3
                    │   berechnen          │
                    └──────────────────────┘
                              │
                    ┌──────────────────────────┐
                    │   Neue Ergebnisgröße =   │ ── S4
                    │ arg max (Produkt aus alter│
                    │   a-priori Verteilung und │
                    │   allen Gaußverteilungen) │
                    └──────────────────────────┘
                              │
                    ┌──────────────────────┐
                    │   Gütefaktor des     │ ── S5
                    │ Ergebnisses berechen │
                    └──────────────────────┘
                              │
┌──────────────────┐    ╱─────────────────────╲
│ Objekt verwerfen │◄── N  Gütefaktor >       ╲ ── S6
└──────────────────┘    ╲  Schwellenwert ?    ╱
        │                ╲─────────────────────╱
       S7                          │ J
                    ┌──────────────────────┐
                    │   Ergebnis und       │ ── S8
                    │ Gütefaktor ausgeben  │
                    └──────────────────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **Frank Dellaert ; C. Thorpe.** *Robust car tracking using Kalman filtering and Bayesian templates*
- Radar and Vision Data Fusion for Hybride Adaptive Cruise Control on Highways. **Hofman ; Rieder ; Dickmanns.** ICVS 2001, LNCS. Springer-Verlag, 2001, vol. 2095, 125-138
- **Coué, C et al.** Multi-sensor data fusion using bayesian programming - an automotive application. *PROCEEDINGS OF THE 2002 IEEE/RSJ INTERNATIONAL CONFERENCE ON INTELLIGENT ROBOTS AND SYSTEMS (IROS 2002), LAUSANNE, SWITZERLAND, SEPT. 30 - OCT. 4, 2002, IEEE/RSJ INTERNATIONAL CONFERENCE ON INTELLIGENT ROBOTS AND SYSTEMS,* 30. September 2002, vol. 1-3, ISBN 0-7803-7398-7, 141-146